# EUROPÄISCHE PATENTANMELDUNG

(11) **EP 1 892 053 A2**
(43) Veröffentlichungstag der Anmeldung: **27.02.2008**
(21) Anmeldenummer: 07016668.1
(22) Anmeldetag: 24.08.2007
(51) Int. Cl.: B23D 33/12

(54) **Vorrichtung zum Ausrichten und Positionieren von Gegenständen**

(30) Priorität: 24.08.2006 DE 102006039757
(71) Anmelder: LAP GmbH Laser Applikationen, D-21337 Lüneburg (DE)
(72) Erfinder: Werner, Hans-Peter, 21394 Westergellersen (DE); Tosch, Peter, 21337 Lüneburg (DE)
(74) Vertreter: Hauck Patent- und Rechtsanwälte

(57) **Zusammenfassung**

Vorrichtung zum Ausrichten und Positionieren von Gegenständen, insbesondere von Blechen, die eine Halterung und mindestens zwei Laser aufweist, die lösbar mit der Halterung verbunden sind,
wobei
die Laser eine Linienoptik aufweisen, die eine Lichtebene erzeugen und eine Hauptabstrahlrichtung besitzen, in die innerhalb der Lichtebene mit der größten Intensität abgestrahlt wird, und
die Laser derart an der Halterung befestigt sind, daß die Lichtebenen zusammenfallen und die Hauptabstrahlrichtungen einen Winkel (α) miteinander einschließen.

## Beschreibung

Die vorliegende Erfindung betrifft eine Vorrichtung zum Ausrichten und Positionieren von Gegenständen, insbesondere von Blechen für einen Zuschnitt.

Der Schnitt von Blechen in Walzwerken erfordert ein präzises Ausrichten und Positionieren der Bleche unter den Scheren. Hierzu ist es bekannt, einen optischen Anschlag zu verwenden. Dies ist ein Linienlaser, der auf das zu schneidende Blech ausgerichtet wird und auf diesem eine definierte Linie projiziert. Auch bei anderen Anwendungen, beispielsweise beim Absetzen von Gegenständen, werden Linienlaser eingesetzt, um Markierungslinien auf den Untergrund zu projizieren. Ein technisches Problem dabei ist, eine gut sichtbare, lange Linie von beispielsweise 30 oder mehr Metern zu erzeugen. Hierzu sind Laser mit einer großen Ausgangsleistung erforderlich.

Der Erfindung liegt die Aufgabe zugrunde, eine Vorrichtung zum Ausrichten und Positionieren von Gegenständen bereitzustellen, die die vorstehenden Nachteile vermeidet und insbesondere auch in der Lage ist, mit einfachen Mitteln eine gut sichtbare Markierungslinie über mehrere Meter hinweg zu erzeugen.

Erfindungsgemäß wird die Aufgabe durch eine Vorrichtung mit den Merkmalen aus Anspruch 1 gelöst. Vorteilhafte Ausgestaltungen bilden die Gegenstände der Unteransprüche.

Die erfindungsgemäße Vorrichtung zum Ausrichten und Positionieren von Gegenständen weist eine Halterung und mindestens zwei Laser auf. Die Laser sind lösbar mit der Halterung verbunden. Jeder der Laser ist mit jeweils einer Linienoptik versehen, die eine Lichtebene erzeugt und eine Hauptabstrahlrichtung besitzt. In der Hauptabstrahlrichtung innerhalb der Lichtebene wird das Laserlicht mit der größten Intensität abgestrahlt. Die Linienoptik bewirkt, daß eine durch zwei Randstrahlen begrenzte Lichtebene ausgesendet wird, die um die Hauptabstrahlrichtung herum eine größere Intensität als in den Randbereichen besitzt.

Die Laser sind derart an der Halterung befestigt, daß die Lichtebenen zusammenfallen und die Hauptabstrahlrichtungen voneinander verschieden sind und dabei einen Winkel einschließen. Bei der erfindungsgemäßen Halterung werden die Laser relativ zueinander gehalten derart, daß eine gemeinsame Lichtebene mit mehreren Hauptabstrahlrichtungen entsteht. Wird für Markierungszwecke eine solche Lichtebene auf einen Gegenstand gerichtet, so entsteht entlang dem Schnitt der Lichtebene mit der Oberfläche des Gegenstands eine Laserlinie. Die Intensität der Laserlinie besitzt im Bereich der Hauptabstrahlrichtung eine besonders große Intensität bzw. Helligkeit. Wichtig an dem erfindungsgemäßen Aufbau ist, daß mehrere Laser die gewünschte Markierungslinie abschnittsweise auf den Gegenstand projizieren, so daß mehrere Laser mit geringeren Leistungen eingesetzt werden können. Die Verwendung eines sehr leistungsstarken Lasers, der in der Lage ist, eine gut sichtbare Linie über den gesamten zu markierenden Abschnitt zu projizieren, besitzt eine deutlich höhere Leistung und damit auch eine höhere Sicherheitsklasse, als die erfindungsgemäß vorgesehenen Lasern, die jeweils nur einen Abschnitt der Markierungslinie auf den Gegenstand projizieren. Je nach Ausgestaltung können die Laser hierbei angeordnet sein, um eine insgesamt kontinuierliche Markierungslinie zu erzeugen. Es ist aber auch möglich, die Laser weiter zu beabstanden, so daß eine unterbrochene Markierungslinie entsteht.

Bei den erfindungsgemäßen Lasern ist jede der Linienoptiken auf einen Abstand eingestellt, auf den das Laserlicht fokussiert ist. Abhängig von dem Abstand des Anbringungsorts der Vorrichtung relativ zu dem zu markierenden Gegenstand sind die Abstände, auf die die Linienoptiken fokussiert sind, unterschiedlich. Der Fokusabstand jeder Linienoptik entspricht ungefähr der Länge der Hauptabstrahlrichtung zwischen Laser und dem zu markierenden Gegenstand.

In einer bevorzugten Ausgestaltung sind zwei Linienoptiken für die Laser vorgesehen, die sich in ihrem Öffnungswinkel der Lichtebene unterscheiden. Öffnungswinkel ist dabei derjenige Winkel, der sich zwischen den beiden äußeren Randstrahlen der Lichtebene erstreckt. Hierbei ist eine erste Linienoptik vorgesehen, deren Öffnungswinkel in der Lichtebene kleiner als der Öffnungswinkel der zweiten Linienoptik ist. Bevorzugt beträgt der Öffnungswinkel der ersten Linienoptik zwischen 10° und 50°. Besonders bevorzugt ist ein Öffnungswinkel zwischen 10° und 30° vorgesehen.

In einer zweckmäßigen Ausgestaltung ist der Öffnungswinkel der zweiten Linienoptik größer und liegt in einem Bereich zwischen 50° und 80°. Bevorzugt wird hier ein Winkelbereich von 50° bis 70° vorgesehen.

Bei der Zuordnung der Linienoptik auf die Laser ist vorgesehen, daß die erste Linienoptik, die weiter vorne liegende Lichtebene erzeugt. Bezogen auf die Auftreffpunkte der Lichtebenen in der Hauptabstrahlrichtung bedeutet dies, daß der Auftreffpunkt des ersten Lasers mit dem kleineren Öffnungswinkel näher zu der Vorrichtung liegt, als der Auftreffpunkt des zweiten Lasers.

Die erfindungsgemäße Vorrichtung wird anhand eines Beispiels mit Hilfe der Figuren näher erläutert. Es zeigt:
Fig. 1 die erfindungsgemäße Vorrichtung mit zwei Lasern in einer Ansicht von der Seite,
Fig. 2 die erfindungsgemäße Vorrichtung in einer perspektivischen Ansicht von schräg hinten,
Fig. 3 das abgestrahlte Licht in einer perspektivischen Ansicht von der Seite,
Fig. 4 eine perspektivische Ansicht der Aufhängung für die Laser,
Fig. 5 ein Gehäuse für die Laser in einer Ansicht von der Seite,
Fig. 6 das Gehäuse aus Fig. 5 in einer Ansicht von hinten,
Fig. 7 einen ersten Laser in einer Querschnittsansicht mit einer Optik, die einen Öffnungswinkel von 20° erzeugt und
Fig. 8 einen zweiten Laser in einer Querschnittsansicht mit einer Optik, die einen Öffnungswinkel von 60° erzeugt.

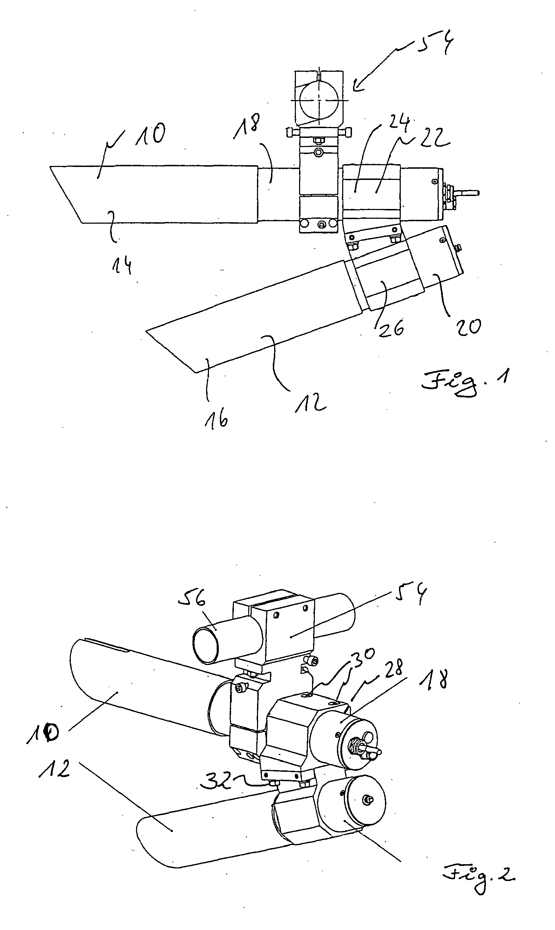

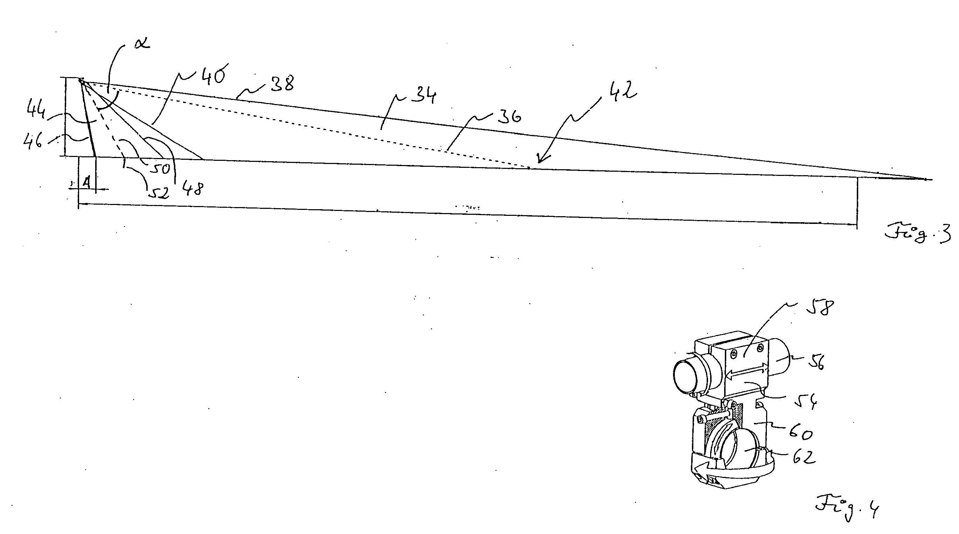

Figur 2 zeigt einen ersten Linienlaser 10 der oberhalb eines zweiten Linienlasers 12 angeordnet ist. Jeder der Linienlaser ist im wesentlichen stabförmig ausgebildet mit einer zylindrischen Blende 14, 16, die nach Art einer Manschette auf den Laserkörper 18, 20 gesetzt ist. Der Laserkörper 18, 20 befindet sich in einem zylindrischen Gehäuse, das in einer Halteeinrichtung 22 gehalten ist. Die Halteeinrichtung 22 besteht aus einem ersten Halteabschnitt 24 und einem zweiten Halteabschnitt 26, die jeweils eine zylindrische Aufnahme für den Laserkörper 18, 20 besitzen. Die zylindrische Aufnahme ist in jedem Halteabschnitt 24, 26 mit einem Schlitz 28 versehen und wird über Fixierschrauben 30, die durch den Schlitz 28 ragen, an dem Laserkörper 18 festgeklemmt.

Die Halteabschnitte 24, 26 werden aneinander über ein Schraubenpaar 32 miteinander verbunden. Die zylindrischen Halteabschnitte sind dabei in einem Winkel von 10 bis 25 Grad, bevorzugt, 15 bis 20 Grad gegeneinander geneigt. In dem dargestellten Ausführungsbeispiel beträgt der Neigungswinkel zwischen der Zylinderachse der ersten zylindrischen Aufnahme und der Zylinderachse der zweiten zylindrischen Aufnahme 17 Grad. Dieser Winkel entspricht dem Winkel α, den die Hauptabstrahlrichtungen miteinander einschließen.

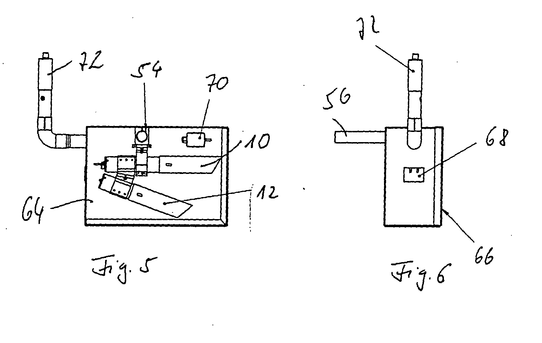

Figur 3 zeigt in einer schematischen Ansicht von der Seite eine Lichtebene 34 des oberen Lasers 10. Die Lichtebene besitzt zwei seitliche Begrenzungsstrahlen 38 und 40 sowie eine Hauptabstrahlrichtung 36. In dem Bereich 42, in dem die Hauptabstrahlrichtung 36 auf den Untergrund trifft, ist die Helligkeit der projektierten Linie am größten. Zu den Randstrahlen 38 und 40 hin nimmt die Helligkeit ab. Der untere Laser 12 erzeugt eine Lichtebene 44, deren Randstrahlen 46, 48 ebenfalls eingezeichnet sind. Der hintere Randstrahl 46 trifft um einen Abstand A versetzt gegenüber dem Aufhängungspunkt der Laser auf. Der hintere Randstrahl 48 trifft in dem dargestellten Ausführungsbeispiel vor den hinteren Randstrahl des oberen Lasers auf. Dies führt dazu, daß auf dem Untergrund eine unterbrochene Projektion der Linie entsteht. Grundsätzlich ist auch eine Anordnung möglich, bei der der hintere Randstrahl 48 weiter von den Lasern entfernt auf den Untergrund trifft als der Randstrahl 40. Die Hauptabstrahlrichtung 50 des unteren Lasers trifft im Bereich 52 auf den Untergrund auf.

Die Linienoptik der Laser 10 und 12 ist derart ausgebildet, daß der obere Laser 10 ungefähr auf den Punkt 42 fokussiert ist, während der untere Laser 12 ungefähr auf den Punkt 52 fokussiert ist.

Zur Befestigung der beiden Laser 10 und 12 ist eine Halteeinrichtung 54 vorgesehen, die lösbar an einer Querstange 56 befestigt ist. Die Querstange 56 ist beispielsweise eine fest in der Halle des Walzwerks vorgesehene Stange. Die Befestigungseinrichtung 54 besitzt einen ersten Halteabschnitt 58, der über Klemmschrauben 60 an der Querstange 56 befestigt wird. Der erste Halteabschnitt kann hierbei sowohl in Längsrichtung der Querstange 56 verschoben als auch entlang derem Umfang gedreht werden.

Der zweite Abschnitt der Befestigungseinrichtung 60 weist ebenfalls eine zylindrische Aufnahme 62 für den Körper des ersten Lasers 18 auf.

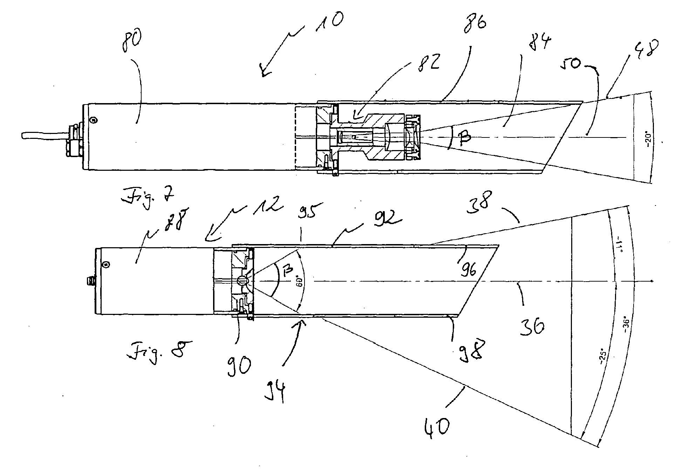

Zum Schutz der Laser 10 und 12 sowie um sicherzustellen, daß diese in ihrer relativen Lage zueinander nicht dejustiert werden, kann ein Schutzgehäuse 64 vorgesehen sein. Das in Fig. 5 und 6 dargestellte Schutzgehäuse besitzt einen im wesentlichen quaderförmigen Aufbau, mit einem Deckel 66, der sich von einem Gehäusegrundkörper abnehmen läßt. In dem Gehäusegrundkörper sind die Laser 10 und 12 sowie deren Halterung 54 angeordnet. Auf der schmalen Rückseite des Grundkörpers befindet sich eine Durchbrechung 68, über die beispielsweise Kabel in das Gehäuseinnere geführt werden können. Ferner ist in dem Gehäuse ein Temperaturfühler 70 vorgesehen, der die Lufttemperatur im Gehäuse mißt und eine sogenannte Air Gun aktiviert. Die Air Gun sitzt in einem rohrförmigen Ansatz 72, der mit dem Gehäusegrundkörper verbunden ist und wird mit Druckluft betrieben, wobei sie nach dem Wirbelrohrprinzip arbeitet. Auch denkbar ist es, über ein Gebläse frische Luft aus der Umgebung in das Gehäuseinnere zu blasen, um die Laser zu kühlen.

Das Gehäuse 64 kann entweder mit der Halterung 54 verbunden sein oder separat an der Querstange 56 befestigt sein.

Figur 7 zeigt den ersten Linienlaser 10 in einer Schnittansicht von der Seite. Der Linienlaser 10 besteht aus einem Laser 80, dessen austretendes Laserlicht in einer Optik 82 linienförmig aufgeweitet wird. Das Laserlicht bereitet sich in einer Lichtebene 84 aus, die mit der dargestellten Zeichenebene zusammenfällt. Der Öffnungswinkel β beträgt in dem dargestellten Ausführungsbeispiel 20°. Die Hauptabstrahlrichtung 50 liegt hierbei symmetrisch in der Lichtebene. Der Randstrahl 48, der benachbart zu dem Randstrahl 40 des zweiten Lasers liegt, wird durch eine rohrförmige Blende 86 begrenzt, die auf den Laser 80 aufgesetzt ist.

Figur 8 zeigt die Ausgestaltung des zweiten Lasers 12, in einer Querschnittsansicht von der Seite. Der Laser 12 besitzt einen Laser 80, auf den eine Optik 90 aufgesetzt ist. Die Optik 90 ist innerhalb einer zylindrischen Blende 92 angeordnet. Die Optik 90 besitzt einen Öffnungswinkel von 60°, in dem die Lichtlinie aufgeweitet wird. Der Öffnungswinkel ist ebenfalls wieder mit β bezeichnet. Die von der Optik 90 erzeugte Lichtebene verläuft wie bei dem Linienlaser aus Figur 10 in der Zeichnungsebene. Das mit dem Öffnungswinkel von 60° aufgeweitete Laserlicht trifft in den Punkten 94, 95 auf die Blende 92. Die Blende 92 besitzt einen oberen Schlitz 96 und einen unteren Schlitz 98. Das Laserlicht tritt in der Lichtebene über die Schlitze aus und bildet somit eine Lichtebene mit Begrenzungsstrahlen 100 und 102, die unterschiedliche Winkel der Hauptabstrahlrichtung 36 einschließen. Die so entstehende Lichtebene besitzt eine Geometrie, in der der untere Randstrahl 40 einen größeren Winkel mit der Hauptabstrahlrichtung 36 einschließt als der obere Randstrahl 38 mit der Hauptabstrahlrichtung 36. Dies wird erreicht, indem die Schlitze 96 und 98 in der zylindrischen Blende 92 in unterschiedlichen Abständen von der Optik 90 einsetzen.

## Patentansprüche

1. Vorrichtung zum Ausrichten und Positionieren von Gegenständen, insbesondere von Blechen, die eine Halterung und mindestens zwei Laser aufweist, die lösbar mit der Halterung verbunden sind,
**dadurch gekennzeichnet, daß**
die Laser (10, 12) eine Linienoptik aufweisen, die eine Lichtebene (34, 44) erzeugen und eine Hauptabstrahlrichtung (36, 52) besitzen, in die innerhalb der Lichtebene mit der größten Intensität abgestrahlt wird, und
die Laser (10, 12) derart an der Halterung (22) befestigt sind, daß die Lichtebenen zusammenfallen und die Hauptabstrahlrichtungen (36, 50) einen Winkel (α) miteinander einschließen.

2. Vorrichtung nach Anspruch 1, **dadurch gekennzeichnet, daß** eine Projektion der Lichtebenen auf einen flachen Gegenstand eine kontinuierliche Linie erzeugt.

3. Vorrichtung nach Anspruch 1, **dadurch gekennzeichnet, daß** eine Projektion der Lichtebene auf einen flachen Gegenstand eine unterbrochene Linie erzeugt.

4. Vorrichtung nach einem der Ansprüche 1 bis 3, **dadurch gekennzeichnet, daß** jede Linienoptik auf einen Gegenstand in einem Bereich vor und hinter dem Auftreffpunkt (42, 52) der Hauptabstrahlrichtung (36, 50) gerichtet ist, der einen Linienabschnitt erzeugt.

5. Vorrichtung nach Anspruch 5, **dadurch gekennzeichnet, daß** der Linienabschnitt eine Intensität besitzt, die für das menschliche Auge gut sichtbar ist.

6. Vorrichtung nach einem der Ansprüche 1 bis 5, **dadurch gekennzeichnet, daß** ein Gehäuse vorgesehen ist, das die Laser und die Halterung aufnimmt und eine Kühlung aufweist.

7. Vorrichtung nach Anspruch 6, **dadurch gekennzeichnet, daß** die Kühlung ein Gebläse besitzt, um Luft in das Innere des Gehäuses zu blasen.

8. Vorrichtung nach Anspruch 6 oder 7, **dadurch gekennzeichnet, daß** ein Temperaturfühler in dem Gehäuse vorgesehen ist.

9. Vorrichtung nach einem der Ansprüche 1 bis 8, **dadurch gekennzeichnet, daß** eine erste Linienoptik eine Lichtebene mit einem kleineren Öffnungswinkel als die zweite Linienoptik erzeugt.

10. Vorrichtung nach Anspruch 9, **dadurch gekennzeichnet, daß** der Öffnungswinkel der ersten Linienoptik zwischen 10° und 50° beträgt.

11. Vorrichtung nach Anspruch 10, **dadurch gekennzeichnet, daß** der Öffnungswinkel der ersten Linienoptik 10° bis 30° beträgt.

12. Vorrichtung nach einem der Ansprüche 9 bis 11, **dadurch gekennzeichnet, daß** die zweite Linienoptik eine Öffnungswinkel von 50° bis 80° besitzt.

13. Vorrichtung nach einem der Ansprüche 9 bis 12, **dadurch gekennzeichnet, daß** die zweite Linienoptik einen Öffnungswinkel von 50° bis 70° besitzt.

14. Vorrichtung nach Anspruch 9 bis 13, **dadurch gekennzeichnet, daß** die zweite Linienoptik die Lichtebene erzeugt, deren Hauptabstrahlrichtung einen weiter entfernt liegenden Auftreffpunkt besitzt.
